# EUROPEAN PATENT APPLICATION

(11) **EP 4 711 695 A1**
(43) Date of publication of application: **18.03.2026**
(21) Application number: 25201919.5
(22) Date of filing: 12.09.2025
(51) Int. Cl.: F26B 3/04, B05D 3/00, F26B 3/28, F26B 13/00, F26B 13/10, F26B 21/00, H01M 4/04

(54) **ELECTRODE DRYING DEVICE**

(30) Priority: 13.09.2024 KR 20240125793
(71) Applicant: SAMSUNG SDI CO., LTD., Yongin-si, Gyeonggi-do 17084 (KR)
(72) Inventor: PARK, Jae Seong, 16678 Suwon-si (KR); PYO, Young Hak, 16678 Suwon-si (KR); KIM, Byoung Kuk, 16678 Suwon-si (KR); SEO, Won Sub, 16678 Suwon-si (KR); KIM, Gi Sung, 16678 Suwon-si (KR); LEE, Ga Hyeon, 16678 Suwon-si (KR); LEE, Hae Chan, 16678 Suwon-si (KR); KIM, Dong Hun, 16678 Suwon-si (KR)
(74) Representative: Marks & Clerk LLP

(57) **Abstract**

The present disclosure relates to an electrode drying device including a housing, an electrode transport device configured to transport an electrode through the housing unit in a first direction. An air supply is provided with the housing unit to supply air into the housing unit. A light is disposed between the electrode and the air supply device.

## Description

### BACKGROUND

### Field

The present disclosure relates to an electrode drying device.

### Description of the Related Art

With the rapid spread of electronic devices that use batteries, such as mobile phones, laptop computers, and electric vehicles, the demand for secondary batteries with high energy density and high capacity has been rapidly increasing. Accordingly, research and development to improve performance of lithium secondary batteries is being actively conducted.

Lithium secondary batteries include a positive electrode and a negative electrode containing active materials capable of intercalation and deintercalation of lithium ions and an electrolyte. Lithium secondary batteries generate electrical energy through oxidation and reduction reactions when lithium ions are intercalated/deintercalated into/from the positive and negative electrodes.

The information disclosed in this section forms the background of the present disclosure to improve understanding of the present disclosure and may include information that does not constitute the related art.

### SUMMARY OF THE DISCLOSURE

The present disclosure is directed to providing an electrode drying device that can improve productivity by maintaining the drying quality of the electrodes even when a drying speed is increased.

These and other aspects and features of the present disclosure will be described in or will be apparent from the following description of embodiments of the present disclosure.

According to one embodiment of the present disclosure, there is provided an electrode drying device including a housing, an electrode transport unit configured to transport an electrode through the housing unit in a first direction, an air supply device provided with the housing unit to supply air into the housing, and a light disposed between the electrode and the air supply device.

The light may be spaced apart from the electrode in a second direction that intersects the first direction, and the air supply device may be spaced from the light in the second direction.

A plurality of light source units may be provided in the first direction.

The electrode drying device may further include a reflector configured to reflect light emitted from the light toward the electrode.

The reflector may include a first reflector disposed between the light and the air supply device, and a second reflector extending from the first reflector to cover sides of the light.

The second reflector may be inclined at an angle relative to the first reflector.

The angle between the first reflector and the second reflector may be obtuse.

The electrode may include a negative electrode plate and a negative electrode active material layer coated on the negative electrode plate.

The negative electrode plate may include a coated portion on which the negative electrode active material layer is coated and an uncoated portion on which the negative electrode active material layer is not coated.

The electrode drying device may further include a masking plate positioned between the electrode and the light source unit and configured to block some of light emitted from the light.

The masking plate may include a light transmitting portion configured to face a coated portion of the electrode and through which light may pass and a light blocking portion configured to face an uncoated portion of the electrode and block light.

The electrode drying device may further include an exhaust duct inside the housing to exhaust internal air from the housing.

The exhaust unit may include a first exhaust duct disposed between the electrode and the air supply device and a second exhaust duct disposed between the air supply duct and an inner surface of the housing.

The light may include a plurality of lights, the first exhaust duct may include an inner exhaust part disposed between the lights and an outer exhaust part spaced from the inner exhaust part in the first direction.

The inner exhaust part may include an inner exhaust portion forming a flow path for air and an inner exhaust hole portion that is provided in an outer surface of the inner exhaust portion and through which air can flow into the inner exhaust part.

The inner exhaust hole portion may include a first inner exhaust hole portion passing through a first surface of the inner exhaust portion and a second surface that faces the first surface and is spaced from the first surface in the first direction, and a second inner exhaust hole portion passing through a third surface of the inner exhaust duct portion that intersects the first surface and the second surface and extends in the second direction.

The outer exhaust part may include an outer exhaust portion forming a flow path for air and an outer exhaust hole portion provided in an outer surface of the outer exhaust portion and through which air can flow into the outer exhaust portion.

The outer exhaust hole portion may include a first outer exhaust hole portion passing through a first surface of the outer exhaust portion in the first direction and a second outer exhaust hole portion passing through a second surface of the outer exhaust duct portion that intersects the first surface and extends in the second direction.

A plurality of electrodes may be spaced in a third direction intersecting the first direction and the second direction.

The light may include a halogen lamp.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a perspective view schematically showing a configuration of an electrode drying device according to a first embodiment of the present disclosure;
FIG. 2 is a cross-sectional view schematically showing the configuration of the electrode drying device according to the first embodiment of the present disclosure;
FIG. 3 is a plan view schematically showing a configuration of an electrode according to the first embodiment of the present disclosure;
FIG. 4 is a perspective view schematically showing a configuration of an electrode drying device according to a second embodiment of the present disclosure;
FIG. 5 is a cross-sectional view schematically showing the configuration of the electrode drying device according to the second embodiment of the present disclosure;
FIG. 6 is a perspective view schematically showing a configuration of an electrode drying device according to a third embodiment of the present disclosure;
FIG. 7 is a cross-sectional view schematically showing the configuration of the electrode drying device according to the third embodiment of the present disclosure;
FIG. 8 is a plan view schematically showing a configuration of a masking plate according to the third embodiment of the present disclosure;
FIG. 9 is a perspective view schematically showing a configuration of an electrode drying device according to a fourth embodiment of the present disclosure;
FIG. 10 is a cross-sectional view schematically showing the configuration of the electrode drying device according to the fourth embodiment of the present disclosure;
FIG. 11 is a cross-sectional view schematically showing a configuration of an inner exhaust unit according to the fourth embodiment of the present disclosure; and
FIG. 12 is a cross-sectional view schematically showing a configuration of an outer exhaust unit according to the fourth embodiment of the present disclosure.

### DETAILED DESCRIPTION

Embodiments of the present disclosure will be described with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein includes all sub-ranges of the same numerical precision subsumed within the recited range. For example, a range of " 1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein includes all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. **In** addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

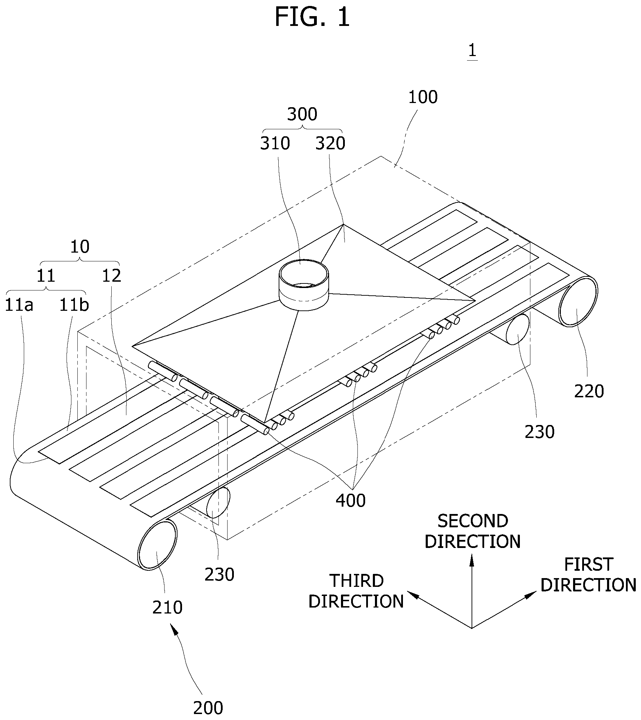

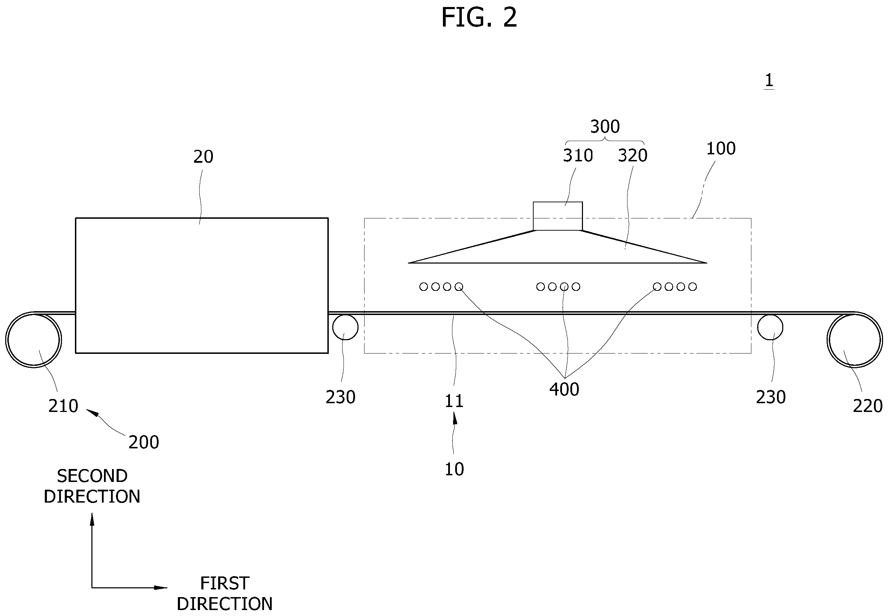

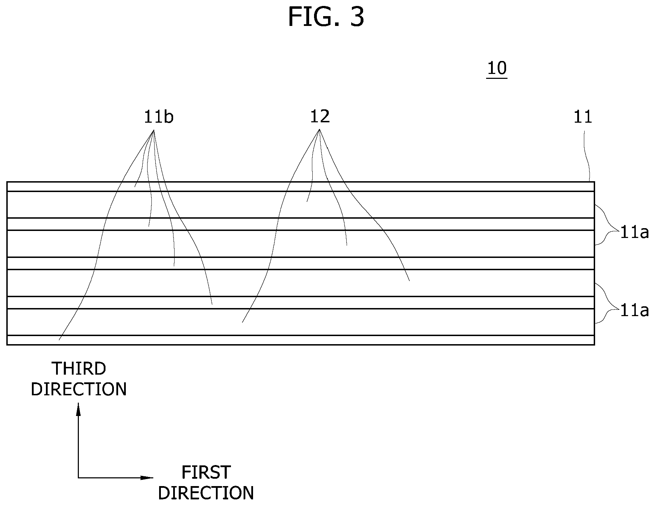

FIG. 1 is a perspective view schematically showing a configuration of an electrode drying device according to a first embodiment of the present disclosure, FIG. 2 is a cross-sectional view schematically showing the configuration of the electrode drying device according to the first embodiment of the present disclosure, and FIG. 3 is a plan view schematically showing a configuration of an electrode according to the first embodiment of the present disclosure.

Referring to FIGS. 1 to 3, an electrode drying device 1 according to the first embodiment of the present disclosure may function as a device for continuously drying a long sheet-shaped electrode 10. The electrode drying device 1 may include a housing unit 100, an electrode transport unit 200, an air supply unit 300, and a light source unit 400.

The housing unit 100 may form an exterior of the electrode drying device 1 and may be formed in a hollow shape in which an internal space is provided. FIG. 1 shows an example in which the housing unit 100 has a hexahedral shape. But the shape of the housing unit 100 is not limited thereto and may be designed to have various other shapes such as a circular cross-section, an elliptical cross-section, a polygon with sharp corners, etc.

The housing unit 100 may have a form in which a front surface where an electrode 10 is supplied and a rear surface where the electrode 10 is discharged are partially open so that the electrode 10 may be continuously supplied and discharged. The remaining surfaces of the housing unit 100, that is, a bottom surface, a top surface, a pair of side surfaces, etc., may form a closed structure. Therefore, it is possible to maintain an internal temperature of the housing unit 100 in a range and to prevent foreign substances, etc. from entering the internal space of the housing unit 100 from outside.

Part of the electrode transport unit 200 may be disposed in the housing unit 100 and other parts of the electrode transport unit 200 may be disposed outside of the housing unit 100. The electrode transport unit 200 may transport the electrode 10 in a first direction. More specifically, the electrode transport unit 200 may transport the electrode 10 in the first direction so that the electrode 10 passes through the inside of the housing unit 100. Here, the first direction may refer to a traveling direction of the electrode 10. As such, the electrode transport unit 200 may be disposed at an inlet side and an outlet side of the housing unit 100. The electrode transport unit 200 may include an unwinding roll 210 disposed at the inlet side of the housing unit 100 from which the electrode 10 is unwound and supplied to the housing unit 100. A winding roll 220 is disposed at the outlet side of the housing unit 100 where the electrode 10 is discharged and on which the electrode 10 is wound after having been unwound from the unwinding roll 210 and passed through the inside of the housing unit 100.

A drive motor (not shown) may be connected to the winding roll 220. The drive motor may provide a rotational force to the winding roll 220. For example, a motor shaft of the drive motor may be axially coupled to a central portion of the winding roll 220 to rotate the winding roll 220.

The electrode transport unit 200 may further include a guide roll 230. In particular, guide rolls 230 may be disposed at each of the inlet side and the outlet side of the housing unit 100. The guide rolls 230 may be disposed between the unwinding roll 210 and the winding roll 220. The guide rolls 230 may guide the movement of the electrode 10 in the first direction and support the electrode 10 so that the electrode 10 dried inside the housing unit 100 while a constant tension is maintained in the electrode and the electrode does not sag.

The electrode 10 may function as a negative electrode or a positive electrode in an electrode assembly for a lithium-ion secondary battery. Hereafter, an example in which the electrode 10 is the negative electrode of the electrode assembly will be described. However, the electrode 10 is not limited thereto and may also function as the positive electrode of the electrode assembly.

A plurality of electrodes 10 according to the present embodiment may be disposed to be spaced apart in a third direction that intersects the first direction and a second direction as shown in FIG. 1. Here, the third direction may refer to a width direction of the electrode 10and a width direction of the housing unit 100.

The electrode 10 may include a negative electrode plate 11 and a negative electrode active material layer 12. The negative electrode plate 11 may be formed as a foil including a metallic material such as copper, a copper alloy, nickel, or a nickel alloy. The type, size, shape, etc. of the negative electrode plate 11 are not limited as long as the negative electrode plate 11 has conductivity and does not cause a chemical change in the secondary battery in which it is used. The cross-sectional shape of the negative electrode plate 11 may be various shapes other than the rectangular shape depicted in FIG. 3.

The negative electrode active material layer 12 may be coated on the negative electrode plate 11. The negative electrode active material layer 12 may be coated on both surfaces of the negative electrode plate 11 or coated on only one surface of the negative electrode plate 11.

In the present embodiment, since the electrode 10 functions as a negative electrode, the negative electrode active material layer 12 may include a negative electrode active material. The negative electrode active material may include a material capable of reversible intercalation/deintercalation of lithium ions, lithium metal, an alloy of lithium and a metal, a material capable of doping and dedoping lithium, or a transition metal oxide.

The material capable of reversible intercalation/deintercalation of lithium ions may be a carbon-based negative electrode active material, and may include, for example, crystalline carbon, amorphous carbon, or a combination thereof.

Examples of the crystalline carbon may include graphite, such as amorphous, plate-like, flaky, spherical, or fibrous natural graphite or artificial graphite, and examples of the amorphous carbon may include soft carbon, hard carbon, mesophase pitch carbide, calcined coke, etc.

As the alloy of lithium and a metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

An Si-based negative electrode active material or an Sn-based negative electrode active material may be used as the material capable of doping and dedoping lithium. The Si-based negative electrode active material may include silicon, a silicon-carbon composite, SiOₓ (0<x<2), a Si-Q alloy, or a combination thereof. In the formula Si-Q, Q is selected from an alkali metal, an alkaline earth metal, a group 13 element, a group 14 element (excluding Si), a group 15 element, a group 16 element, a transition metal, a rare earth element, and a combination thereof. The Sn-based negative electrode active material may be Sn, SnO₂, an Sn-based alloy, or a combination thereof.

The silicon-carbon composite may be a composite of silicon and amorphous carbon. The silicon-carbon composite may be in the form of silicon particles with their surfaces coated with amorphous carbon. For example, the silicon-carbon composite may include a secondary particle (core) in which silicon primary particles are assembled and an amorphous carbon coating layer (shell) located on a surface of the secondary particle. The amorphous carbon may also be located between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles and an amorphous carbon coating layer located on a surface of the core.

The Si-based negative electrode active material or the Sn-based negative electrode active material may be used in combination with a carbon-based negative electrode active material.

The negative electrode active material layer 12 may further include a negative electrode conductive material and a negative electrode binder.

The negative electrode conductive material is used to impart conductivity to the negative electrode active material layer 12. Any material that is electronically conductive and does not cause a chemical change in the secondary battery may be used as the negative electrode active material layer 12. Examples of the negative electrode conductive material may include a carbon-based material such as natural graphite, artificial graphite, carbon black, acetylene black, Ketjenblack, carbon fibers, carbon nanofibers, carbon nanotubes, a metal-based material in the form of a metal powder or metal fiber containing copper, nickel, aluminum, silver, etc., a conductive polymer such as a polyphenylene derivative, or a mixture thereof.

The negative electrode binder may serve to attach particles constituting the negative electrode active material to each other and also attach the negative electrode active material to the negative electrode plate 11. Examples of the negative electrode binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene monomer copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the negative electrode binder, the negative electrode binder may further include a cellulose-based compound capable of imparting viscosity. As the cellulose-based compound, one or more of carboxymethyl cellulose, hydroxypropyl methyl cellulose, methyl cellulose, or alkali metal salts thereof may be mixed and used. As the alkali metal, Na, K, or Li may be used.

The dry binder is a polymer material that may be fiberized, such as polytetrafluoroethylene, polyvinylidene fluoride, a polyvinylidene fluoride-hexafluoropropylene copolymer, polyethylene oxide, or a combination thereof.

The negative electrode plate 11 may include a coated portion 11a on which the negative electrode active material layer 12 is coated and an uncoated portion 11b on which the negative electrode active material layer 12 is not coated. The uncoated portion 11b may be formed in an edge region of the negative electrode plate 11.

The air supply unit 300 may be provided in the housing unit 100 to supply air into the housing unit 100. That is, the air supply unit 300 may supply air from outside the housing unit 100 into the housing unit 100. The air supply unit 300 may be configured to prevent the interior of the housing unit 100 from rising above a preset temperature due to high-temperature thermal energy and light energy emitted from the light source unit 400. In other words, the air supply unit 300 may function to cool the inside of the housing unit 100.

The air supply unit 300 may be spaced apart from the light source unit 400. More specifically, the air supply unit 300 may be spaced apart from the light source unit 400 in the second direction that intersects the first direction. Here, the second direction is a height direction of the housing unit 100. The air supply unit 300 and the light source unit 400 may be vertically disposed inside the housing unit 100.

The air supply unit 300 may include an air supply duct portion 310 and an air supply diffusion portion 320. The air supply duct portion 310 may be formed in a hollow shape in which an internal flow path is provided. The air supply duct portion 310 may pass through a top surface of the housing unit 100 and be fixed to the housing unit 100. The air supply duct portion 310 may connect the internal space of the housing unit 100 to the space outside the housing unit 100. The air supply duct portion 310 may extend in an opposite direction of the second direction from the top surface of the housing unit 100. An air supply fan (not shown) for forcibly supplying external air into the housing unit 100 may be provided in the air supply duct portion 310.

The air supply diffusion portion 320 may extend in the opposite direction of the second direction from the air supply duct portion 310. The air supply diffusion portion 320 may be accommodated inside the housing unit 100. In particular, the air supply diffusion portion 320 may be disposed at an upper side of the housing unit 100 inside the housing unit 100.

The air supplied into the housing unit 100 through the air supply unit 300 may be directed toward the light source unit 400 to cool the light source unit 400. In addition, the air directed toward the light source unit 400 may be converted by the light source unit 400 into high-temperature hot air to dry the electrode 10.

The air supply diffusion portion 320 may extend from a lower end portion of the air supply duct portion 310 in the first direction and extend from the other side of the lower end portion of the air supply duct portion 310 in an opposite direction of the first direction. For example, the air supply diffusion portion 320 may extend outward in all directions from a lower end portion of the air supply duct portion 310. The air supply diffusion portion 320 may serve to diffuse the air supplied through the air supply duct portion 310 throughout the internal space of the housing unit 100.

The light source unit 400 may be provided inside the housing unit 100. The light source unit 400 may include, for example, a halogen lamp that generates light at a near-infrared wavelength. The high-temperature thermal energy and light energy emitted from the light source unit 400 may be transmitted to the electrode 10 to dry the electrode 10.

The light source unit 400 may be positioned between the electrode 10 and the air supply unit 300, and the light source unit 400 may be spaced from the electrode 10. In particular, the light source unit 400 may be spaced apart from the electrode 10 in the second direction. That is, the light source unit 400 and the electrode 10 may be vertically disposed inside the housing unit 100. A plurality of light source units 400 may be spaced apart in the first direction. In some examples, the light source unit 400 may be an assembly of light sources disposed in the first direction.

The electrode drying device 1 according to the first embodiment of the present disclosure may be disposed to the side of a drying furnace 20. In detail, the electrode drying device 1 according to the present embodiment may be located at a rear side of the drying furnace 20 that dries the electrode 10 using hot air, with the electrode drying device thereby functioning as an auxiliary drying device that further dries the electrode 10 that has passed through the drying furnace 20.

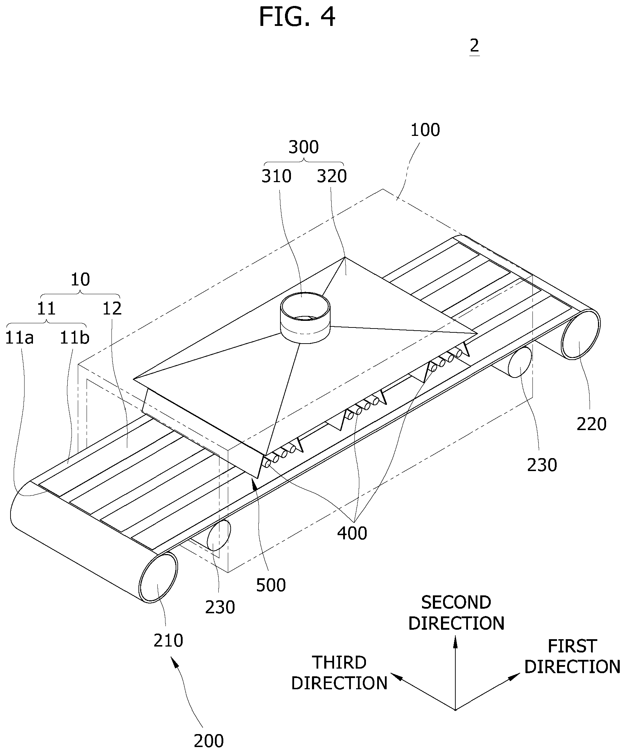

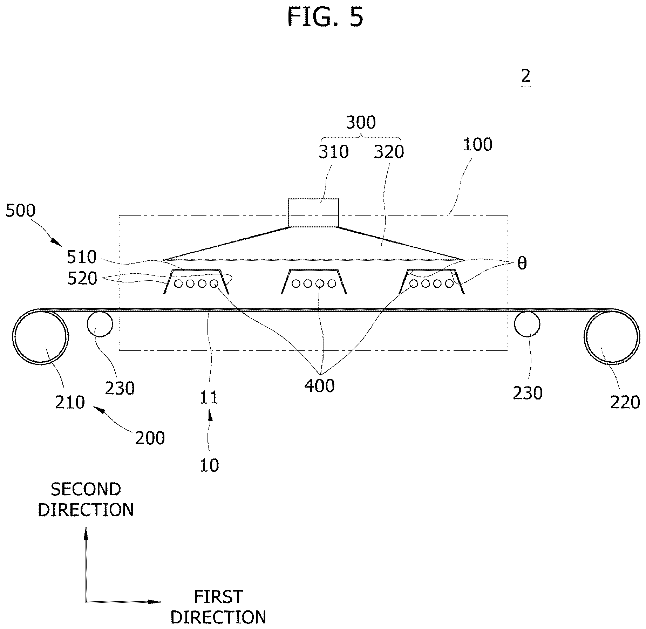

FIG. 4 is a perspective view schematically showing a configuration of an electrode drying device according to a second embodiment of the present disclosure, and FIG. 5 is a cross-sectional view schematically showing the configuration of the electrode drying device according to the second embodiment of the present disclosure.

Referring to FIGS. 4 and 5, an electrode drying device 2 according to the second embodiment of the present disclosure may include a housing unit 100, an electrode transport unit 200, an air supply unit 300, a light source unit 400, and a reflector 500.

In describing the electrode drying device 2 according to the second embodiment of the present disclosure, the reflector 500 that is not included in the electrode drying device 1 according to the first embodiment of the present disclosure will be described. Descriptions of other components of the electrode drying device 1 according to the first embodiment of the present disclosure are the same as the other components of the electrode drying device 2 according to the second embodiment of the present disclosure.

The reflector 500 may be provided inside the housing unit 100. In some examples, a plurality of reflectors 500 is provided in the housing unit 100. The reflector 500 may reflect light emitted from the light source unit 400 in a direction toward which the electrode 10 is located. In particular, the reflector 500 may reflect the light emitted from the light source unit 400 so that the light is concentrated on the electrode 10 and not diffused throughout the inside of the housing unit 100.

The reflector 500 may be formed in a flat plate shape. A surface of the reflector 500 may be glossy. The reflector 500 may include a first reflector 510 and a second reflector 520.

The first reflector 510 may be disposed between the light source unit 400 and the air supply unit 300 in the first direction. The first reflector 510 may be horizontally disposed inside the housing unit 100. The light emitted from the light source unit 400 is prevented from radiating in the second direction and is reflected by the first reflector 510 to radiate towards the electrode 10.

The second reflector 520 may extend from the first reflector 510. In particular, the second reflector 520 may extend from end portions of the first reflector 510 to cover both sides of the light source unit 400. The second reflector 520 may extend in a direction opposite to the second direction from the first reflector 510. The light emitted from the light source unit 400 may be reflected by the second reflector 520 and radiated towards the electrode 10. The second reflector 520 may be disposed in the opposite direction of the second direction. The second reflector 520 may be inclined at an angle relative to the first reflector 510. The angle (θ) between the first reflector 510 and the second reflector 520 may be obtuse. Moreover, an internal angle (θ) between one second reflector 520 extending downward in an inclined manner from an end portion of one side of the first reflector 510 and the first reflector 510 may be an obtuse angle, and an internal angle between another second reflector 520 extending downward in an inclined manner from an end portion of the other side of the first reflector 510 and the first reflector 510 may be obtuse. Therefore, the reflector 500 according to the present embodiment may be formed in a shape that becomes wider in the direction opposite to the second direction.

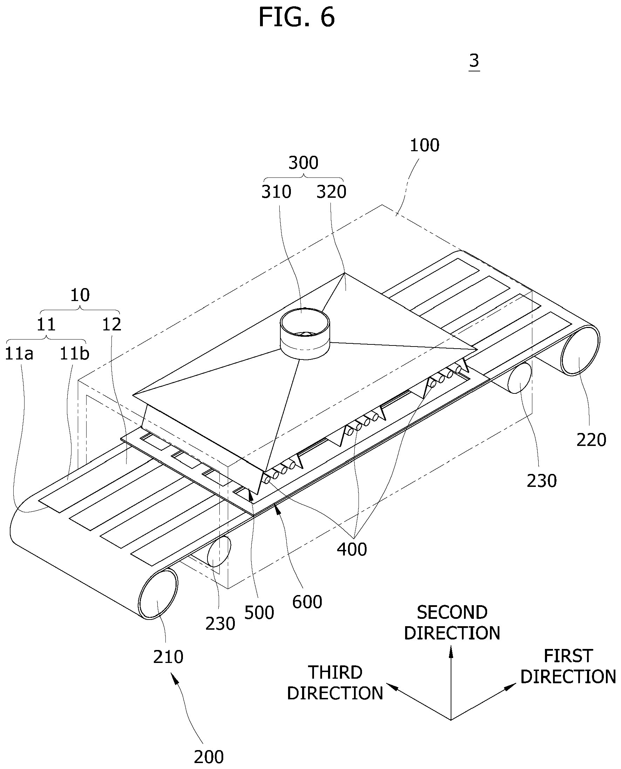

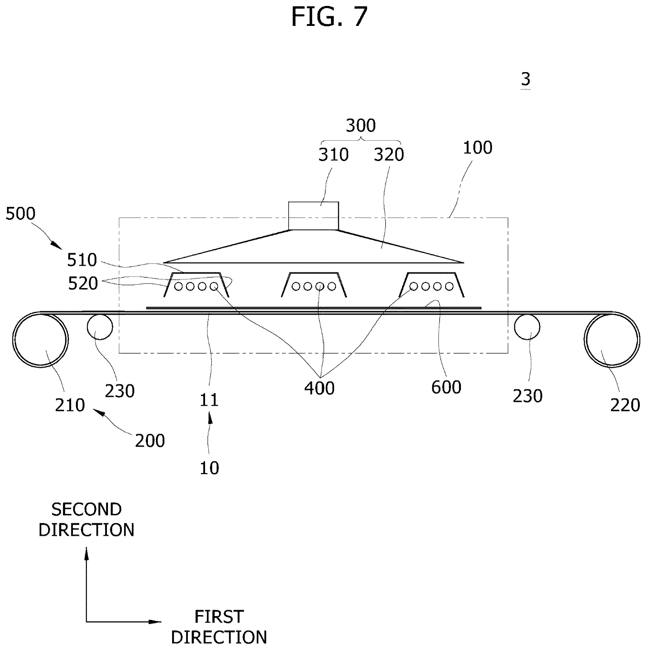

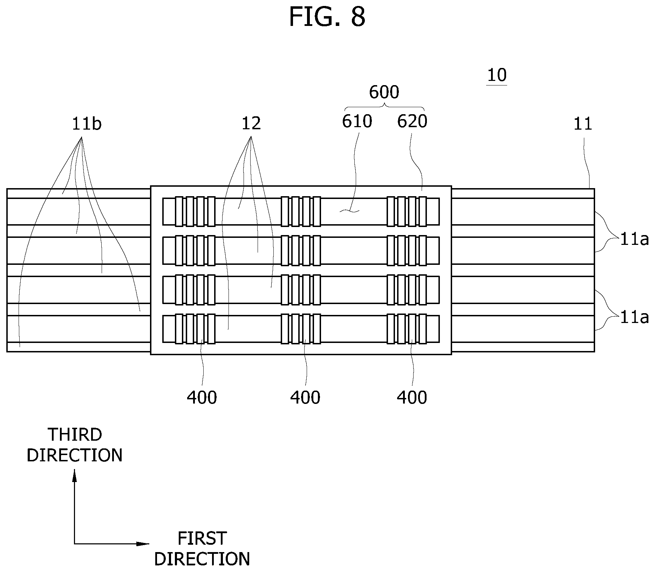

FIG. 6 is a perspective view schematically showing a configuration of an electrode drying device according to a third embodiment of the present disclosure, FIG. 7 is a cross-sectional view schematically showing the configuration of the electrode drying device according to the third embodiment of the present disclosure, and FIG. 8 is a plan view schematically showing a configuration of a masking plate according to the third embodiment of the present disclosure.

Referring to FIGS. 6 to 8, an electrode drying device 3 according to the third embodiment of the present disclosure may include a housing unit 100, an electrode transport unit 200, an air supply unit 300, a light source unit 400, a reflector 500, and a masking plate 600. In describing the electrode drying device 3 according to the third embodiment of the present disclosure, the masking plate 600 that was not included in the electrode drying device 1 according to the first embodiment of the present disclosure or in the electrode drying device 2 according to the second embodiment of the present disclosure will be described.

The masking plate 600 may be provided inside the housing unit 100. In particular, the masking plate 600 may be disposed between the electrode 10 and the light source unit 400. The masking plate 600 may be formed in a flat plate shape extending in the first direction. That is, the masking plate 600 may be horizontally disposed inside the housing unit 100. The masking plate 600 may selectively block light emitted from the light source unit 400. For example, the masking plate 600 may be made of a non-transmissive material that does not allow the light emitted from the light source unit 400 to pass therethrough or may include a reflective material that reflects at least some of the light emitted from the light source unit 400. The masking plate 600 may include a light transmitting portion 610 and a light blocking portion 620.

The light transmitting portion 610 may be a region through which the light emitted from the light source unit 400 passes without being blocked or reflected and may be formed to pass through the masking plate 600 in a thickness direction. That is, the light transmitting portion 610 may be formed to pass through the masking plate 600 in the second direction. For example, the light transmitting portion 610 may be an opening formed in a portion of the masking plate 600. The light transmitting portion 610 may be disposed to face the coated portion 11a of the negative electrode plate 11. The light emitted from the light source unit 400 may pass through the light transmitting portion 610 toward the coated portion 11a.

The light blocking portion 620 may refer to the remaining region of the masking plate 600 other than the region in which the light transmitting portion 610 is formed. The light blocking portion 620 may be a region in which light emitted from the light source unit 400 is blocked or reflected.

The light blocking portion 620 may be disposed to face the uncoated portion 11b of the negative electrode plate 11. The light emitted from the light source unit 400 may be blocked by the light blocking portion 620 and thereby not radiated to the uncoated portion 11b. Thus, it is possible to prevent deformation of the uncoated portion 11b, such as wrinkling, due to high-temperature light energy being radiated onto the uncoated portion 11b for a period of time.

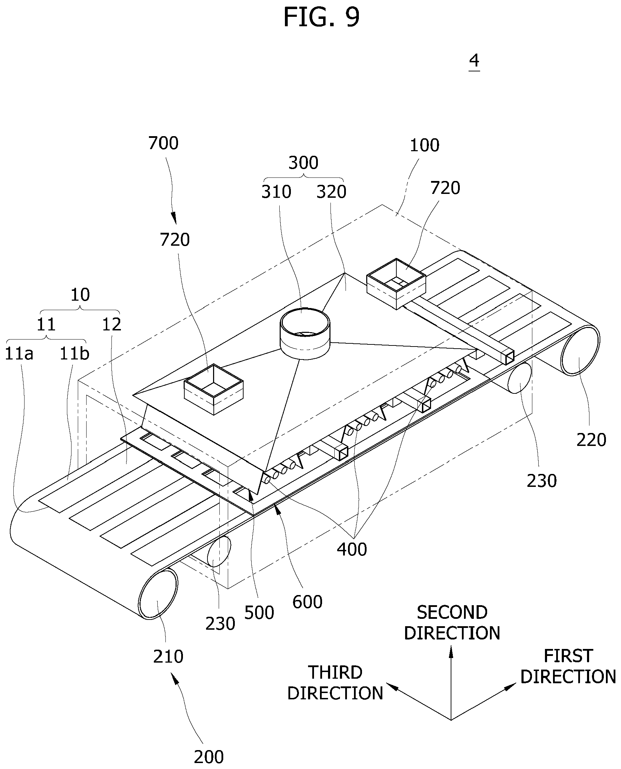

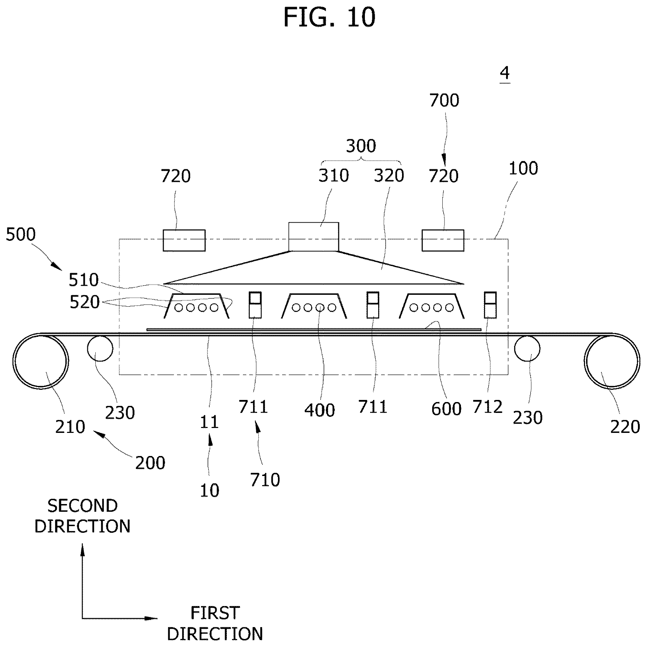

FIG. 9 is a perspective view schematically showing a configuration of an electrode drying device according to a fourth embodiment of the present disclosure, and FIG. 10 is a cross-sectional view schematically showing the configuration of the electrode drying device according to the fourth embodiment of the present disclosure.

Referring to FIGS. 9 and 10, an electrode drying device 4 according to the fourth embodiment of the present disclosure may include a housing unit 100, an electrode transport unit 200, an air supply unit 300, a light source unit 400, a reflector 500, a masking plate 600, and an exhaust unit 700. In describing the electrode drying device 4 according to the fourth embodiment of the present disclosure, the exhaust unit 700 that was not included in the electrode drying device 1 according to the first embodiment of the present disclosure, the electrode drying device 2 according to the second embodiment of the present disclosure, or the electrode drying device 3 according to the third embodiment of the present disclosure will be described.

The exhaust unit 700 may be provided inside the housing unit 100. The exhaust unit 700 may exhaust air from the housing unit 100 to outside of the housing unit 100. For example, water vapor, fumes, etc. inside the housing unit 100 may be discharged to outside of the housing unit 100 through the exhaust unit 700.

An exhaust fan (not shown) for forcibly exhausting the internal air of the housing unit 100 to outside may be installed in the exhaust unit 700.

The exhaust unit 700 may include a first exhaust unit 710 and a second exhaust unit 720. The first exhaust unit 710 may be disposed between the electrode 10 and the air supply unit 300. The first exhaust unit 710 may have a shape extending in a direction parallel to the second direction, and the first exhaust unit 710 may be vertically disposed inside the housing unit 100. The first exhaust unit 710 according to the present embodiment comprise an inner exhaust unit 711 and an outer exhaust unit 712.

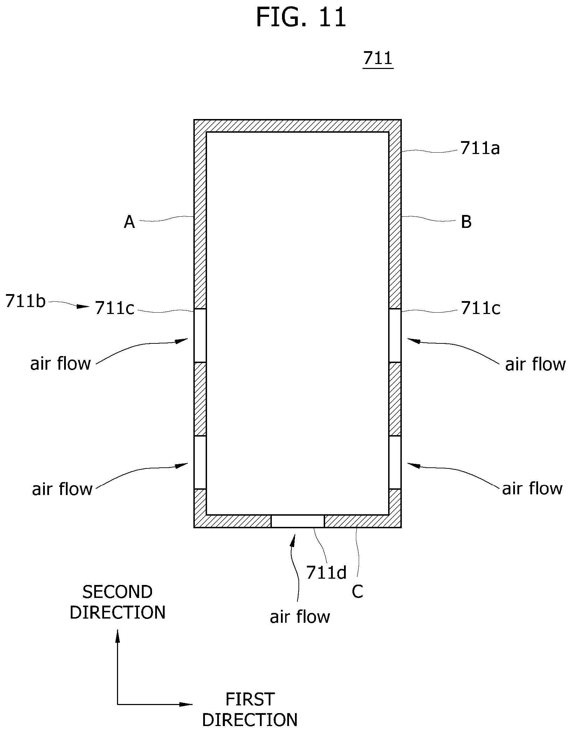

FIG. 11 is a cross-sectional view schematically showing a configuration of the inner exhaust unit according to the fourth embodiment of the present disclosure.

Referring to FIGS. 9 to 11, the inner exhaust unit 711 may be disposed between the light source units 400. The inner exhaust unit 711 may be disposed between a plurality of light source units 400 disposed in the first direction. A plurality of inner exhaust units 711 may be disposed to be spaced apart in the first direction.

The inner exhaust unit 711 may include an inner exhaust duct portion 711a and an inner exhaust hole portion 711b. The inner exhaust duct portion 711a may form an exterior of the inner exhaust unit 711 and may be formed as a hollow structure. A path through which air flows may be provided inside the inner exhaust duct portion 711a. An end portion of the inner exhaust duct portion 711a may be connected to an outer surface of the housing unit 100 so that the inner exhaust duct portion 711a may communicate with outside of the housing unit 100. The inner exhaust duct portion 711a may be formed in a shape of a prism with a quadrangular cross-section. But the shape of the inner exhaust duct portion 711a is not limited thereto and may be various other shapes so as to have a circular cross-section, an elliptical cross-section, be a polygon with sharp corners, etc.

The inner exhaust hole portion 711b may be provided in an outer surface of the inner exhaust duct portion 711a. And the inner exhaust hole portion 711b may be formed to pass through the outer surface of the inner exhaust duct portion 711a. Air may flow into the inner exhaust duct portion 711a through the inner exhaust hole portion 711b. The inner exhaust hole portion 711b may include a first inner exhaust hole portion 711c and a second inner exhaust hole portion 711d.

The first inner exhaust hole portion 711c may be provided in a first surface A of the inner exhaust duct portion 711a and in a second surface B that faces the first surface A and is spaced apart from the first surface A. The first surface A of the inner exhaust duct portion 711a may be disposed to face the light source unit 400, and the second surface B may be disposed to face the neighboring light source unit 400 facing the first surface A of the inner exhaust duct portion 711a.

The first inner exhaust hole portion 711c may be formed to pass through the first surface A and the second surface B of the inner exhaust duct portion 711a in the first direction. The air around the light source unit 400 may flow into the inner exhaust duct portion 711a through the first inner exhaust hole portion 711c. The illustrated arrows represent a direction of air flow.

The second inner exhaust hole portion 711d may be provided in a third surface C of the inner exhaust duct portion 711a, which is disposed to intersect the first surface A and the second surface B of the inner exhaust duct portion 711a. The third surface C of the inner exhaust duct portion 711a may be disposed to face the electrode 10.

The second inner exhaust hole portion 711d may be formed to pass through the third surface C of the inner exhaust duct portion 711a in the second direction. The air from around the electrode 10 may flow into the inner exhaust duct portion 711a through the second inner exhaust hole portion 711d. The illustrated arrows represent a direction of air flow.

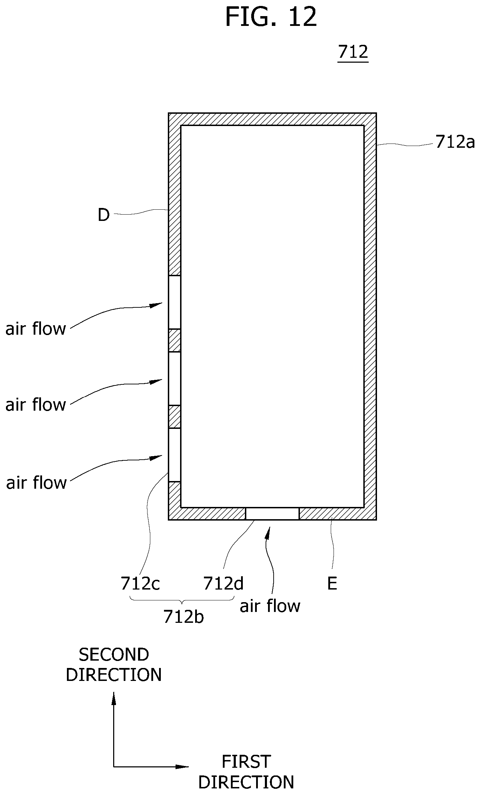

FIG. 12 is a cross-sectional view schematically showing a configuration of the outer exhaust unit according to the fourth embodiment of the present disclosure.

Referring to FIGS. 9 to 12, the outer exhaust unit 712 may be spaced from the inner exhaust unit 711 in the first direction, and the outer exhaust unit 712 may be disposed at an outlet side of the housing unit 100. For example, the outer exhaust unit 712 may be spaced from the light source unit 400 located at the outlet side of the housing unit 100 in the first direction.

The outer exhaust unit 712 may include an outer exhaust duct portion 712a and an outer exhaust hole portion 712b.

The outer exhaust duct portion 712a may form an exterior of the outer exhaust unit 712 and may be formed in a hollow shape. A path through which air flows may be provided inside the outer exhaust duct portion 712a. An end portion of the outer exhaust duct portion 712a may be connected to the outer surface of the housing unit 100 so that the outer exhaust duct portion 712a may be in fluid communication with outside of the housing unit 100.

The outer exhaust duct portion 712a may be formed in a shape of a prism with a quadrangular cross-section. But the shape of the outer exhaust duct portion 712a is not limited thereto and may be various other shapes so as to have a circular cross-section, an elliptical cross-section, be a polygon with sharp corners, etc.

The outer exhaust hole portion 712b may be provided in an outer surface of the outer exhaust duct portion 712a. The outer exhaust hole portion 712b may be formed to pass through the outer surface of the outer exhaust duct portion 712a. Air may flow into the outer exhaust duct portion 712a through the outer exhaust hole portion 712b. The outer exhaust hole portion 712b may include a first outer exhaust hole portion 712c and a second outer exhaust hole portion 712d.

The first outer exhaust hole portion 712c may be provided in a first surface D of the outer exhaust duct portion 712a. The first surface D of the outer exhaust duct portion 712a may be disposed to face the light source unit 400 located at the outlet side of the housing unit 100. The first outer exhaust hole portion 712c may be formed to pass through the first surface D of the outer exhaust duct portion 712a in the first direction. The air from around the light source unit 400 located at the outlet side of the housing unit 100 may flow into the outer exhaust duct portion 712a through the first outer exhaust hole portion 712c. The illustrated arrows represent a direction of air flow.

The second outer exhaust hole portion 712d may be provided in a second surface E of the outer exhaust duct portion 712a, which is disposed to intersect the first surface D of the outer exhaust duct portion 712a. The second surface E of the outer exhaust duct portion 712a may face the electrode 10.

The second outer exhaust hole portion 712d may be formed to pass through the second surface E of the outer exhaust duct portion 712a in the second direction. The air from around the electrode 10 located at the outlet side of the housing unit 100 may flow into the outer exhaust duct portion 712a through the second outer exhaust hole portion 712d. The illustrated arrows represent a direction of air flow.

The second exhaust unit 720 according to the present embodiment may be disposed between the air supply unit 300 and an inner surface of the housing unit 100. The second exhaust unit 720 may have a shape extending in the second direction. The second exhaust unit 720 may be vertically disposed inside the housing unit 100.

The second exhaust unit 720 and the first exhaust unit 710 may be disposed above and below the air supply unit 300 inside the housing unit 100. The second exhaust unit 720 may be spaced apart from the air supply unit 300 in the second direction, and the first exhaust unit 710 may be spaced apart from the air supply unit 300 in the opposite direction of the second direction.

A plurality of second exhaust units 720 may be provided apart from each other in the first direction. The second exhaust unit 720 may be formed in a hollow shape with the top and bottom surfaces thereof open in the second direction. A path through which air flows may be provided inside the second exhaust unit 720.

The second exhaust unit 720 may be formed in a shape of a prism with a quadrangular cross-section. But the shape of the second exhaust unit 720 is not limited thereto and may be various other shapes so as to have a circular cross-section, an elliptical cross-section, be a polygon with sharp corners, etc. The second exhaust unit 720 may discharge air containing water vapor, fumes, etc. flowing in an upper side of the inside of the housing unit 100 that is not exhausted through the first exhaust unit 710 to outside of the housing unit 100.

An upper end portion of the second exhaust unit 720 may pass through the top surface of the housing unit 100 and may be fixed to the housing unit 100. The open top surface of the housing unit 100 may communicate with outside of the housing unit 100.

According to one embodiment of the present disclosure, unlike a conventional drying method that dries an electrode with high-temperature hot air, by configuring a light source unit including a halogen lamp that generates a near-infrared wavelength, an electrode can be dried by operating the light source unit while the electrode is transported without stopping to transmit thermal energy and light energy to the electrode.

According to one embodiment of the present disclosure, an electrode drying device according to the present embodiment can be provided adjacent to the rear side of a conventional drying furnace to perform a function as an auxiliary drying device that further dries the electrode after it has passed through the drying furnace.

According to an embodiment of the present disclosure, by configuring an air supply unit that supplies external air into a housing unit to cool a light source unit, the interior of the housing unit can be prevented from rising above a preset temperature caused by high-temperature thermal energy and light energy emitted from the light source unit, and the air directed towards the light source unit can be converted into high-temperature hot air by the light source unit to thereby dry the electrode with hot air.

According to an embodiment of the present disclosure, by configuring a masking plate that selectively blocks light emitted from a light source unit, deformation (e.g., wrinkling) of an uncoated portion due to high-temperature light energy radiated onto the uncoated portion of an electrode can be prevented.

According to an embodiment of the present disclosure, by configuring an exhaust unit that exhausts the internal air of a housing unit to outside, water vapor, fumes, etc. flowing in the housing unit can be discharged to outside of the housing unit.

However, the effects obtainable through the present disclosure are not limited to the effects described above, and other technical effects that are not mentioned will be clearly understood by those skilled in the art from the following description of the present disclosure.

While the present disclosure has been described with reference to some example embodiments shown in the drawings, these embodiments are merely illustrative and it is to be understood that various modifications and equivalent other embodiments can be derived by those skilled in the art on the basis of the embodiments. Therefore, the technical scope of the present disclosure should be defined by the claims.

## Claims

1. An electrode drying device comprising:
a housing;
an electrode transport device configured to transport an electrode inside the housing in a first direction;
an air supply device provided with the housing to supply air into the housing; and
a light source disposed between the electrode and the air supply device.

2. The electrode drying device of claim 1, wherein the light source is spaced from the electrode in a second direction that intersects the first direction, and
wherein the air supply device is spaced from the light source in the second direction.

3. The electrode drying device of claim 2, wherein a plurality of light sources are provided in the first direction.

4. The electrode drying device of claim 3, further comprising a reflector configured to reflect light emitted from the light source toward the electrode.

5. The electrode drying device of claim 4, wherein, the reflector includes:
a first reflector disposed between the light source and the air supply device; and
a second reflector extending from the first reflector to cover sides of the light source.

6. The electrode drying device of claim 5, wherein the second reflector is inclined at an angle relative to the first reflector.

7. The electrode drying device of any of claims 3 to 6, further comprising the electrode, wherein the electrode includes:
a negative electrode plate; and
a negative electrode active material layer coated on the negative electrode plate.

8. The electrode drying device of claim 7, wherein the negative electrode plate includes:
a coated portion on which the negative electrode active material layer is coated; and
an uncoated portion on which the negative electrode active material layer is not coated.

9. The electrode drying device of claim 7 or 8, further comprising a masking plate positioned between the electrode and the light source and configured to block some of light emitted from the light source.

10. The electrode drying device of any of claims 3 to 9, further comprising an exhaust unit inside the housing to exhaust internal air from the housing.

11. The electrode drying device of claim 10, wherein the exhaust unit includes:
a first exhaust duct disposed between the electrode and the air supply device; and
a second exhaust duct disposed between the air supply device and an inner surface of the housing.

12. The electrode drying device of claim 11, wherein the light source includes a plurality of light sources, and the first exhaust duct includes:
an inner exhaust part disposed between the light sources; and
an outer exhaust part spaced from the inner exhaust part in the first direction.

13. The electrode drying device of claim 12, wherein the inner exhaust part includes:
an inner exhaust portion forming a flow path for air; and
an inner exhaust hole portion provided in an outer surface of the inner exhaust portion and through which air can flow into the inner exhaust portion.

14. The electrode drying device of claim 12 or 13, wherein the outer exhaust part includes:
an outer exhaust portion forming a flow path for air; and
an outer exhaust hole portion provided in an outer surface of the outer exhaust portion and through which air can flow into the outer exhaust portion.

15. The electrode drying device of any of claims 3 to 14, wherein a plurality of electrodes are spaced in a third direction intersecting the first direction and the second direction.
